# EUROPEAN PATENT APPLICATION

(11) **EP 3 037 930 A1**
(43) Date of publication of application: **29.06.2016**
(21) Application number: 14838193.2
(22) Date of filing: 06.08.2014
(51) Int. Cl.: G06F 3/041, G06F 3/044

(54) **CAPACITIVE TOUCH PANEL**

(30) Priority: 20.08.2013 JP 2013170311
(71) Applicant: Dexerials Corporation, Tokyo 141-0032 (JP)
(72) Inventor: ODAGIRI, Hirokazu, Tokyo 141-0032 (JP); MURAKAMI, Yukio, Tokyo 141-0032 (JP); IMAMURA, Yoshiaki, Tokyo 141-0032 (JP)
(74) Representative: Witte, Weller & Partner Patentanwälte mbB
(86) International application number: PCT/JP2014/070709
(87) International publication number: WO 2015/025711

(57) **Abstract**

Provided is a touch panel that attains reduced size and weight using a multi-layered resin base and reduces a warp due to a difference in linear expansion coefficients of resin layers. The capacitive touch panel 1 according to the invention includes: a transparent resin base 2; a transparent resin layer 3 formed on a front surface of the transparent resin base 2; a decorative printed layer 5 formed at an outer edge of a rear surface of the transparent resin base 2; a warp prevention layer 6 that covers the rear surface of the transparent resin base 2 and the decorative printed layer 5; and a transparent film 10 bonded to a first transparent electrode layer 7a and the warp prevention layer 6 with an adhesive layer 9 in between, and including a second transparent electrode layer 7b. A linear expansion coefficient of the transparent resin base is substantially equal to a linear expansion coefficient of the transparent film.

## Description

### Technical Field

The invention relates to a capacitive touch panel, in particular, to a capacitive touch panel that includes a top plate using a transparent resin base. This application claims the benefit of Japanese Priority Patent Application JP 2013-170311 filed in Japan on August 20, 2013, the entire contents of which are incorporated herein by reference.

### Background Art

With wide spread of smart phones and tablet personal computers (PCs) that are easily operable by means of touch panels, touch panels are now faced with urgent tasks of lower profile, smaller weight, and lower costs.

Touch panels have various detection systems; examples may include a resistance film system and a surface acoustic wave system. The resistance film system involves identifying a designated position by means of two overlaid resistance films. The surface acoustic wave system involves generating an ultrasonic wave or a surface acoustic wave in a panel surface to detect a designated position. Touch panels used in smart phones and tablet PCs as mentioned above have to cope with complicated operation having a certain degree of freedom, such as tapping or dragging with a finger over a panel, a pinch-out movement of moving two fingers apart over a screen to enlarge an image, and a pinch-in operation of moving two fingers closer. A current mainstream is therefore projection capacitive touch panels that use transparent electrodes to form an XY matrix to allow for simultaneous detection of a plurality of designated positions.

Here, various investigations have been made to attain lower profile, smaller weight, and lower costs of touch panels. Some attempts have been made to replace a glass-made top plate with a resin-made top plate. The top plate is disposed so as to cover a surface of a capacitive sheet in which a transparent electrode is formed, for purpose of protection of the capacitive sheet. Also, attempts have been actively pursued to reduce the number of capacitive sheets from two to one by, for example, forming transparent electrodes on both sides of a film, to attain both lower profile and lower costs.

### Citation List

### Patent Literature

PTL1: Japanese Unexamined Patent Application Publication No. 2000-207983

### Summary

### Technical Problem

In a case with use of a resin top plate in a capacitive touch panel, a resin material having high heat resistance, e.g., a polycarbonate (PC) resin, may be generally used, in consideration of exposure to a high-temperature environment in manufacture of a touch panel or a liquid crystal panel on which the touch panel is mounted. Moreover, a surface of a touch panel is exposed to an external environment, and its surface may be easily flawed. Since the PC resin has low hardness, flaws in the surface of the top plate made of the PC resin may cause a disadvantage of defects in terms of design or visibility. Thus, the surface of the top plate may be multi-layered with a rigid resin having high hardness. For example, with use of a two-layered extruded molding technique, a multi-layered transparent resin base has been developed that includes the PC resin and an acrylic resin (a polymethylmethacrylate resin or Poly(Methyl Methacrylate): PMMA).

However, the PC resin as a principal base and the PMMA resin for surface protection differ in linear expansion coefficients. Accordingly, in a two-layered base of the PC resin and the PMMA resin, there may be a disadvantage of a warp of a top plate caused by, for example, changes in environment temperatures in manufacture of a panel or after mounting of the panel on a product.

Furthermore, as an underlayer of the top plate, a resin-made film is bonded and stacked. On the resin-made film, a transparent electrode is formed. It is therefore necessary to consider a warp of the whole touch panel based on linear expansion coefficients in accordance with a material of the bonded film.

Patent Literature 1 (PTL1) discloses a technique of adhesion of polyethylene terephthalate (PET) resin sheets to both sides of the PC resin, in order to relax a warp of a base caused by a difference in linear expansion coefficients of top plate resin materials. However, the adhesion of the PET resin sheets to both sides of a principal base with use of an adhesive material may cause a complicated manufacture process, as well as an increase in costs including material costs of the adhesive material and other materials. Accordingly, instead of the PET resin, a top plate base for a touch panel has become available, as mentioned above, in which the PMMA resin is integrally formed on both sides of the PC resin. However, the PMMA resin does not always have high heat resistance. Moreover, manufacture of such three-layered resin base may involve a special extrusion die. Accordingly, there still remains a disadvantage of lowered productivity and rising manufacture costs.

It is therefore an object of the invention to provide a touch panel that attains lower profile and smaller weight of a top plate using a multi-layered resin base and reduces a warp due to a difference in linear expansion coefficients of transparent resin layers.

### Solution to Problem

To solve a problem as described above, according to one embodiment of the invention, there is provided a capacitive touch panel that includes: a transparent resin base; a transparent resin layer formed on one surface of the transparent resin base and made of a different material from a material of the transparent resin base; a decorative printed layer formed at an outer edge of another surface of the transparent resin base; a warp prevention layer that covers the another surface of the transparent resin base and the decorative printed layer, in which a first transparent electrode layer is formed on a surface of the warp prevention layer; and a transparent substrate bonded to the first transparent electrode layer and the warp prevention layer with an adhesive layer in between, and including a second transparent electrode layer. Moreover, a linear expansion coefficient of the transparent resin base is substantially equal to a linear expansion coefficient of the transparent substrate.

### Effects of Invention

According to the invention, the linear expansion coefficient of the transparent substrate including the transparent electrode substantially coincides with the linear expansion coefficient of the transparent resin base as a top plate. Hence, it is possible to reduce a warp of the capacitive touch panel.

### Brief Description of Drawings

[FIG. 1] FIG. 1 is a view of a configuration of a capacitive touch panel according to an embodiment of the invention. (A) of FIG. 1 is a plan view of the capacitive touch panel. (B) of FIG. 1 is a cross-sectional view taken along an AA' line of (A) of FIG. 1.
[FIG. 2] FIG. 2 is a cross-sectional view of a capacitive touch panel according to another embodiment of the invention.
[FIG. 3] FIG. 3 is a view of a capacitive touch panel with temperature stress applied thereto, causing tensile stress due to linear expansion coefficients to be generated in each member that constitutes a top plate. (A) of FIG. 3 illustrates a case of the capacitive touch panel according to the invention. (B) of FIG. 3 illustrates a case of a capacitive touch panel according to a prior art.
[FIG. 4] FIG. 4 is a graph of a plot of measured values of warps after application of heat stress in an example and a comparative example regarding the capacitive touch panels.
[FIG. 5] FIG. 5 is a view of a configuration of a capacitive touch panel of a prior art. (A) of FIG. 5 is a plan view. (B) of FIG. 5 is a cross-sectional view taken along an AA' line of (A) of FIG. 5.

### Description of Embodiments

In the following, some embodiments according to the invention are described in detail with reference to the drawings. Note that example embodiments described below are not intended to limit the contents of the invention. It should therefore be appreciated that variations may be made without departing from the scope of the invention. Note that dimensions as illustrated in the figures are schematic; in particular, dimensions in cross-sectional views are emphasized in a thickwise direction for purpose of clearer illustration of configurations.

### (Configuration Example of Capacitive Touch Panel)

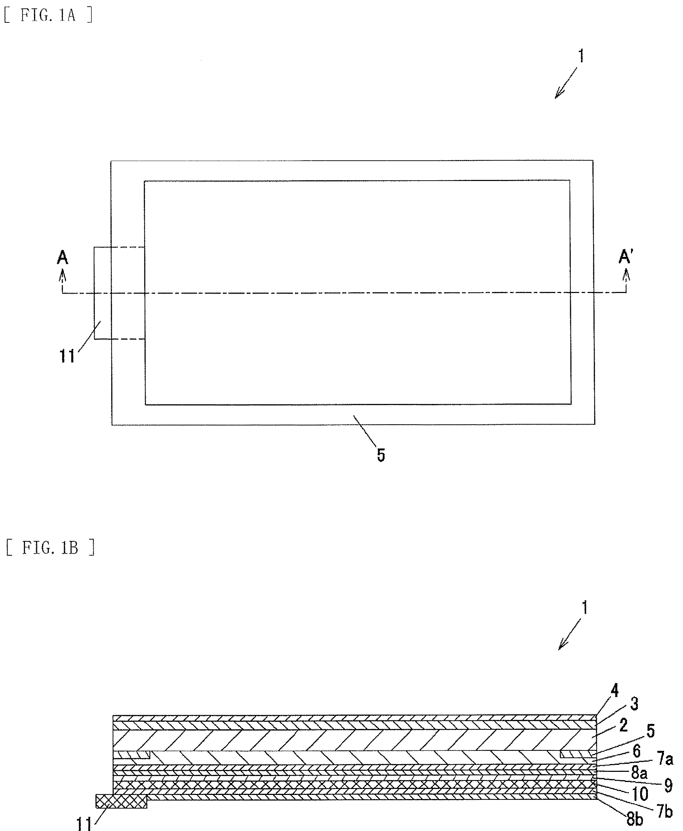

As illustrated in (A) of FIG. 1 and (B) of FIG. 1, a capacitive touch panel 1 includes a transparent resin base 2, a transparent resin layer 3, a decorative printed layer 5, a warp prevention layer 6, and a first transparent electrode layer 7a. The transparent resin base 2 may include a resin material having high heat resistance. The transparent resin layer 3 is formed on one surface, i.e., a front surface, of the transparent resin base 2, and may include a rigid resin material having high hardness. The decorative printed layer 5 is formed at an outer edge of another surface, i.e., a rear surface, of the transparent resin base 2. The warp prevention layer 6 covers rear-surface side of the transparent resin base 2 and the decorative printed layer 5. The first transparent electrode layer 7a is formed on a front surface of the warp prevention layer 6.

Furthermore, as illustrated in (B) of FIG. 1, the capacitive touch panel 1 may include a first transparent protection layer 8a and a transparent film 10. The first transparent protection layer 8a may be formed on a front surface of the first transparent electrode layer 7a, and is adapted to protect the first transparent electrode layer 7a. The transparent film 10 may be bonded to the first transparent protection layer 8a with a transparent adhesive member 9 in between. A second transparent electrode layer 7b is formed on the transparent film 10. In order to protect a front surface of the second transparent electrode layer 7b, a second transparent protection layer 8b may be formed on the second transparent electrode layer 7b. Wirings (not illustrated) extended from the first and the second transparent electrode layers 7a and 7b may establish electrical coupling to external circuits through a flexible printed circuit board (FPC) 11.

The transparent resin base 2 may be preferably made of a PC resin that is a resin material having high heat resistance. The transparent resin layer 3 may be preferably made of a PMMA resin that is a rigid resin material having high hardness. In general, flaw-resistance of a touch panel surface is evaluated with pencil hardness (a scratch hardness test, JIS K 5600). The PC resin as a single base has surface hardness of HB to H both inclusive, and may be easily flawed. Meanwhile, the PMMA resin has surface hardness of 3H to 5H both inclusive, and may be preferred as a material used as a touch panel surface. Thus, the transparent resin layer 3 made of, for example, the PMMA resin is formed on the one surface of the transparent resin base 2 made of, for example, the PC resin, i.e., on front-surface side of the capacitive touch panel 1. This makes it possible to achieve a flaw-resistant touch panel. Furthermore, a top coating layer 4 may be formed as a protection layer on a front surface of the transparent resin layer 3.

The transparent resin base 2 on the front surface of which the transparent resin layer 3 is formed may be formed, with use of two kinds of resin materials, by simultaneous melt molding.

The decorative printed layer 5 is formed at an outer edge of a liquid crystal screen that constitutes a smart phone, a tablet terminal, or other devices, and may be a layer provided for coverage of a frame region, i.e. a region in which electrodes, wirings, and other components necessary to allow a touch panel to function are formed, to prevent the region from being seen through from outside. The decorative printed layer 5 may be formed, by silk screen printing, by re-coating of a colored ink in multiple layers. In order to obtain a coating of a predetermined thickness to prevent the electrodes, the wirings, and other components formed in the frame region from being seen through, since one-time thick coating is likely to cause unevenness, it is necessary to thin a coating layer per each coating, allowing for plural-time coating to form a multi-layered printed layer. For example, in a case with a dark-colored ink that does not allow light to easily pass through, a printed layer may be formed by two-time coating. In a case of a light-colored (such as white) ink that allows light to easily pass through, about four-time re-coating may be necessary. When a thickness per one-time coating is about 8 µm, a layer of the light-colored ink may be about 32 µm thick.

The warp prevention layer 6 is formed so as to cover an entire surface over the rear surface of the transparent resin base 2 and the decorative printed layer 5. Preferably, a resin material may be used that has a linear expansion coefficient substantially equal to a linear expansion coefficient of a material used as the transparent resin layer 3 formed on front-surface side of the transparent resin base 2. There is no particular limitation on a material of the warp prevention layer 6. Transparent acrylic resin coating materials, urethane-based resin coating materials, and other materials used in an ultraviolet-curing ink or a thermosetting ink may be used. More specifically, coating materials made of, for example, urethane (meth)acrylate, epoxy (meth)acrylate, polyester (meth)acrylate, polyester urethane (meth)acrylate, polyether (meth)acrylate, polycarbonate (meth)acrylate, and polycarbonate urethane (meth)acrylate may be used. More preferred materials used as the warp prevention layer 6 may have haze of less than 1% in order not to affect optical characteristics of the touch panel. The haze is a ratio of diffused transmitted light to total light transmitted light. Use of coating of, for example, a transparent acrylic or urethane-based resin coating material having low viscosity makes it possible to substantially eliminate a level difference between the decorative printed layer 5 and the transparent resin base 2, and to prevent a wiring from being disconnected because of the level difference when the first transparent electrode layer 7a is formed. As described above, in a case of decorative printing with the light-colored ink, the decorative printed layer 5 may be about 32 µm thick. Accordingly, an acrylic coating material may be applied to a thickness of, for example, about 35 µm, over the rear surface of the transparent resin base 2 and the decorative printed layer 5 to form the warp prevention layer 6. To apply an acrylic coating material to form the warp prevention layer 6, direct application with use of a die coater may be possible, as well as silk screen printing. As described, for formation of the warp prevention layer 6, known application techniques may be used. Accordingly, introduction of special equipment is not necessary. Same equipment as that used for a printing process of the decorative printed layer 5 may be used, leading to reduction in manufacture costs. Note that as to the level difference between the decorative printed layer 5 and the transparent resin base 2, it is sufficient to secure reliability of connection of the wiring of the first transparent electrode layer 7a formed on a front surface of the warp prevention layer 6. Accordingly, perfect planarization is not necessary. For example, the warp prevention layer 6 may be about 30 µm thick, with respect to the 32 µm-thick decorative printed layer 5. Alternatively, the warp prevention layer 6 after formation may have a center thickness smaller than an outer edge thickness. A uniform thickness over a whole surface of the warp prevention layer 6 is not necessary.

The first transparent electrode layer 7a is formed on the warp prevention layer 6. The first transparent electrode layer 7a may be formed with use of a known material. Preferred examples may include Ag or Cu nanowire, and a material that includes, for example, ITO or ZnO. The first transparent electrode layer 7a may include a plurality of wirings, and may be formed so as to cross the second transparent electrode layer 7b as described later with an insulator in between. Thus, a capacitance generated by the first and the second transparent electrode layers 7a and 7b may be equivalently formed. By directly forming the first transparent electrode layer 7a on the front surface of the warp prevention layer 6, it is possible to eliminate a process of bonding of a transparent film on which a transparent electrode layer is formed. It is also possible to achieve lower profile by a thickness of the transparent film.

The second transparent electrode layer 7b may be formed on the transparent film 10, and may be formed with use of a same material as that of the first transparent electrode layer 7a. Accordingly, a preferred material of the second transparent electrode layer 7b may be Ag or Cu nanowire, or a material that includes, for example, ITO or ZnO.

The transparent film 10 may be bonded, by the transparent adhesive member 9, to the front surface of the warp prevention layer 6. The second transparent electrode layer 7b is formed on the transparent film 10, while the first transparent electrode layer 7a is formed on the warp prevention layer 6. As described later in detail, in order to allow linear expansion coefficients of materials to be matched with one another, the transparent film 10 may be preferably made of a same material as that of the transparent resin base 2. In a case with use of the PC resin as the material of the transparent resin base 2, the transparent film 10 may be also preferably made of the PC resin. Note that it is sufficient to use a material having a linear expansion coefficient substantially equal to that of the PC resin. For example, cycloolefin-based resins such as COC and COP resins may be also used. Moreover, the transparent adhesive member 9 may be directly applied over the front surface of the warp prevention layer 6 on which the first transparent electrode layer 7a is formed. However, as illustrated in (B) of FIG. 1, in order to protect the front surface of the first transparent electrode layer 7a, the transparent protection layer 8a may be applied over the front surface of the first transparent electrode layer 7a, and the transparent film 10 may be bonded to a whole surface of the transparent protection layer 8a thus applied, with the transparent adhesive member 9 in between. The first transparent protection layer 8a may be made of a known material. For example, a thermosetting acrylic resin or an ultraviolet-curing resin coating material may be used.

Furthermore, the second transparent protection layer 8b may be also applied over a front surface of the transparent film 10 on which the second transparent electrode layer 7b is formed.

Note that, in a case with use of the material that includes Ag or Cu nanowire as the transparent electrode, in order to prevent oxidation of the transparent electrode, the first and the second transparent protection layers 8a and 8b may be preferably applied over the transparent electrode. Meanwhile, in a case with use of, for example, an ITO film, prevention of oxidation of the transparent electrode is small in degree. Accordingly, the first and the second transparent protection layers 8a and 8b do not have to be applied over the transparent electrode.

The first transparent electrode layer 7a and the second transparent electrode layer 7b may be disposed with the first transparent protection layer 8a, the transparent adhesive member 9, and the transparent film 10 in between. Thus, a transparent electrode X formed in the first transparent electrode layer 7a and a transparent electrode Y formed in the second transparent electrode layer 7b and crossing the transparent electrode X may generate a capacitance at a crossing position.

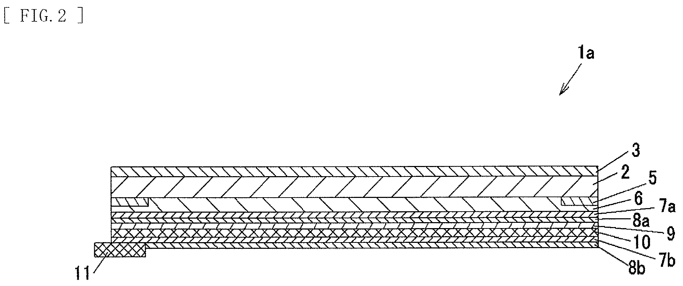

As illustrated in FIG. 2, in the capacitive touch panel 1a, the top coating layer 4 formed on the front surface of the transparent resin layer 3 may be eliminated. This makes it possible to eliminate a coating process of the top coating layer 4, contributing to lower profile of the capacitive touch panel 1 a.

### (Operation Principle)

For description of operation principle of the capacitive touch panel 1 according to the invention, description is given on a configuration of a capacitive touch panel 20 according to a prior art. The capacitive touch panel 20 according to the prior art may include two transparent films on each of which a transparent electrode layer is formed.

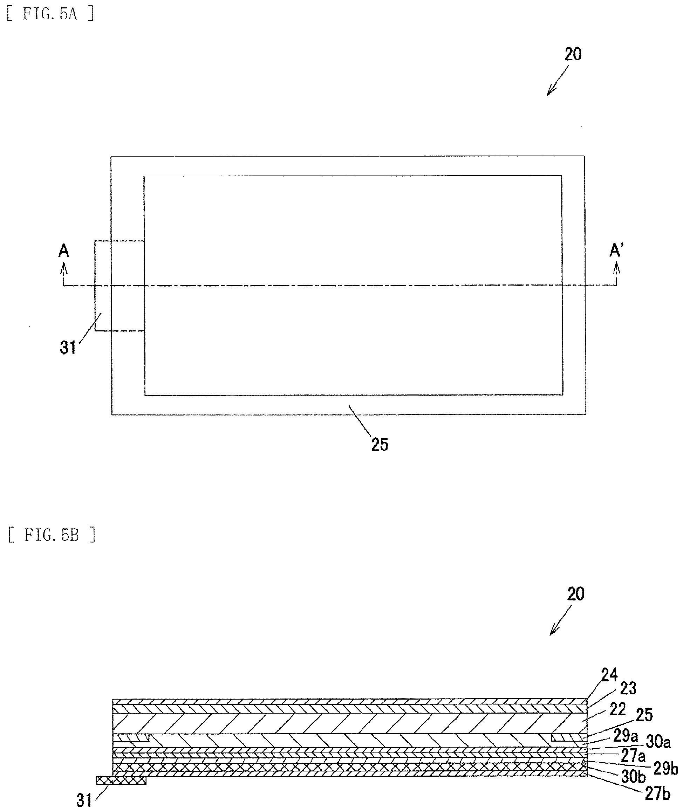

(A) of FIG. 5 is a cross-sectional view of one configuration example of the capacitive touch panel 20 according to the prior art. The capacitive touch panel 20 according to the prior art may include a transparent resin base 22, a transparent resin layer 23, a top coating layer 24, and a decorative printed layer 25. The transparent resin base 22 may be made of, for example, the PC resin. The transparent resin layer 23 may be formed on a front surface of the transparent resin base 22 and made of, for example, the PMMA resin. The top coating layer 24 may be formed on a front surface of the transparent resin layer 23. The decorative printed layer 25 may be formed at an outer edge of a rear surface of the transparent resin base 22.

The capacitive touch panel 20 may include a transparent adhesive member 29a, a first transparent film 30a, and a second transparent film 30b. The transparent adhesive member 29a may be applied over the rear surface of the transparent resin base 22 and the decorative printed layer 25. The first transparent film 30a may be bonded with the transparent adhesive member 29a in between. A first transparent electrode 27a may be formed on the first transparent film 30a. The second transparent film 30b may be further bonded with a transparent adhesive member 29b in between. A second transparent electrode 27b may be formed on the second transparent film 30b.

For the transparent resin base 22 of the capacitive touch panel 20 according to the prior art, the PC resin may be mainly used. For the transparent resin layer 23, the PMMA resin may be mainly used. Moreover, for the transparent films 30a and 30b, a polyethylene terephthalate (PET) resin may be used. In a case with use of the PC resin as the transparent resin base 22, a linear expansion coefficient of the PC resin is about 6×10⁻⁵/°C to 7×10⁻⁵/°C both inclusive. In a case with use of the PMMA resin as the transparent resin layer 23, a linear expansion coefficient of the PMMA resin is 5×10⁻⁵/°C to 9×10⁻⁵/°C both inclusive. Furthermore, in a case with use of the PET resin as the transparent films 30a and 30b, a linear expansion coefficient of the PET resin is 1.5×10⁻⁵/°C to 2×10⁻⁵/°C both inclusive. Thus, in general, the linear expansion coefficients of the transparent resin base 22, the transparent resin layer 23, and the transparent films 30a and 30b that constitute a stacked state differ from one another. Accordingly, when the materials of the layers expand under a high-temperature environment, the layers may receive different tensile stress from one another.

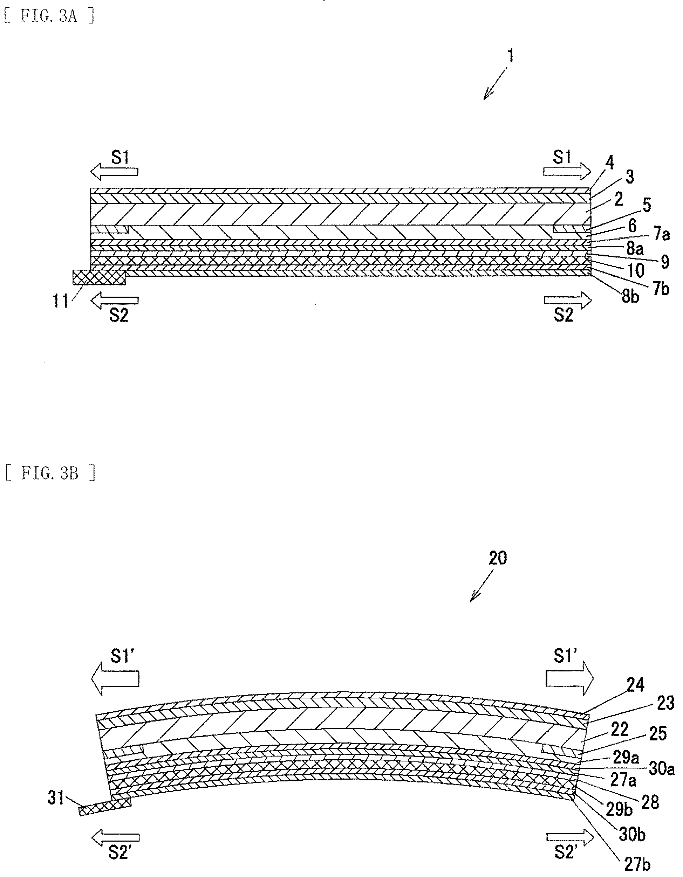

(A) of FIG. 3 and (B) of FIG. 3 conceptionally illustrate comparison of magnitude of the tensile stress derived from the linear expansion coefficients and applied to each of the front-surface side and the rear-surface side of the capacitive touch panel 1 according to the invention and the capacitive touch panel 20 according to the prior art.

As illustrated in (A) of FIG. 3, in the capacitive touch panel 1 according to the invention, the transparent resin layer 3 used on the front-surface side and the warp prevention layer 6 formed on the rear-surface side may have substantially equal linear expansion coefficients. The linear expansion coefficients of the transparent resin base 2 and the transparent film 10 coincide with one another. Hence, it is possible to allow the tensile stress S1 and S2 respectively applied to the front-surface side and the rear-surface side to be substantially equal to one another. The material of the transparent resin layer 3 may be, as described above, for example, the PMMA resin (the linear expansion coefficient: about 5×10⁻⁵/°C to 9×10⁻⁵/°C both inclusive). The material of the warp prevention layer 6 may be an acrylic resin coating material (the linear expansion coefficient: about 5×10⁻⁵/°C to 8×10⁻⁵/°C both inclusive). Thus, it is possible to allow the values of the linear expansion coefficients to substantially coincide with one another. Moreover, by using the PC resin as both the transparent resin base 2 and the transparent film 10, it is possible to allow the linear expansion coefficients to coincide with one another. Note that in a case with use of the cycloolefin-based resin having a linear expansion coefficient substantially equal to that of the PC resin for the material of the transparent film 10, similar effects may be obtained as well (the linear expansion coefficient of the COC resin: 6×10⁻⁵ to 6.5×10⁻⁵ both inclusive, and the linear expansion coefficient of the COP resin: 7×10⁻⁵).

Meanwhile, as illustrated in (B) of FIG. 3, in the capacitive touch panel 20 according to the prior art, the transparent resin layer 23 is used on the front-surface side of the transparent resin base 22. The linear expansion coefficient of the transparent resin layer 23 is different from the linear expansion coefficient of the transparent resin base 22. The PET resin is used as the transparent films 30a and 30b. Thus, the linear expansion coefficients of the layers greatly differ from one another. Accordingly, the linear expansion coefficient S2' of the transparent resin base 22 becomes smaller than the linear expansion coefficient S1' of the transparent resin layer 23, causing an upwardly-protruded warp of the capacitive touch panel 20. In a case with reversed magnitude relation (S1'<S2') of the linear expansion coefficients, the capacitive touch panel 20 may have a downwardly-protruded warp.

### Examples

Measurement and comparison were carried out on a state of occurrence of a warp under a high-temperature environment as to a capacitive touch panel according to the invention, and on a state of occurrence of a warp as to a capacitive touch panel according to a prior art.

Each of touch panel samples fabricated under the following conditions was preserved for 240 hours with use of a hot-air constant-temperature oven set at 70°C. Thereafter, the touch panel samples were taken out. After a lapse of predetermined time at room temperature, a warp was measured at both ends of the touch panel sample. The predetermined time was varied as follows: immediately after taken out from the oven; after a lapse of 5 minutes; and after a lapse of 1 hour.

### (Example)

The touch panel used for the warp measurement was a material made of combination of the PC resin and the PMMA resin (MRS58W, 297mm×210mm×0.8mm, available from Mitsubishi Gas Chemical Company, Inc.). Thicknesses of layers were as follows: a PC resin layer was 0.7 mm thick, and a PMMA resin layer was 0.1 mm thick.

For a decorative printed layer, silk screen printing (mesh #200) was carried out with use of a black ink (MRX-HF919, available from Teikoku Printing Inks Mfg. Co., Ltd.), which was followed by drying and hardening at 80°C for 1 hour (8 µm thick).

A surface on rear-surface side (side on which no PMMA resin layer is formed) of the above-mentioned PC resin layer was subjected to corona treatment. Thereafter, as a warp prevention layer, an acrylic resin coating material (RL-92962, available from Sanyu Rec Co., Ltd.) was applied by silk screen printing (mesh #300). The acrylic resin coating material to constitute the warp prevention layer was applied with a thickness of 50 µm, which was enough to absorb a level difference, since the decorative printed layer sometimes had a thickness of 30 µm or more. The acrylic resin coating material was an ultraviolet-curing transparent resin coating material, and was ultraviolet-cured with use of a high-pressure mercury lamp after a coating process.

Over the warp prevention layer, a coating material that includes Ag nanowire was applied with a bar coater. Thereafter, a transparent electrode was formed by silk screen printing (mesh #200). A transparent protection layer was formed so as to cover the transparent electrode, with use of an overcoat material (FR-1T-NSD9, Asahi Chemical Research Laboratory Co., Ltd.), by screen printing (mesh #200).

Meanwhile, a transparent electrode was formed in a similar manner on the PC film with use of a coating material that includes Ag nanowire. The PC film on which the transparent electrode was formed and the transparent protection layer on which the transparent electrode was formed were bonded together with use of an optical adhesive member (MHM-FW50, Nichiei Kakoh Co., Ltd.).

### (Comparative Example)

On a material made of combination of the PC resin and the PMMA resin (MRS58W, 297mm×210mm×0.8mm, available from Mitsubishi Gas Chemical Company, Inc.) having a same configuration as that in the Example, a decorative printed layer was formed in a similar manner to the Example.

An optical adhesive member (MHM-FW50, Nichiei Kakoh Co., Ltd.) was applied so as to cover rear-surface side of the PC resin layer and the decorative printed layer. A PET resin film (V150A-OFSD5, Nitto Denko Corporation) on which an ITO film as a first-layer transparent electrode was formed was bonded. To the PET film thus bonded, another PET film on which a second-layer transparent electrode was formed was bonded with an optical adhesive member in between.

### (Result)

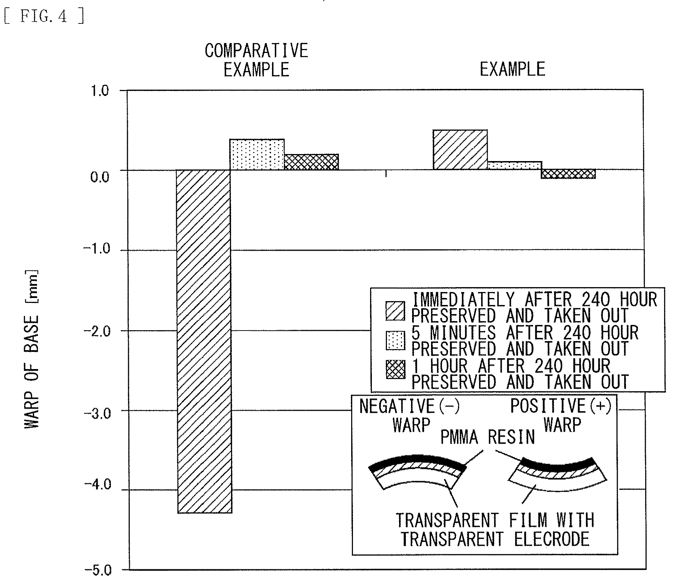

Table 1 and FIG. 4 summarize measurement results.

**(Table 1)**

| | Initial stage (mm) | After 70°C 240 hour preserved and taken out (mm) | | |
|---|---|---|---|---|
| | | Immediately thereafter | 5 Minutes | 1 Hour |
| Comparative Example | 0.3 | -4.3 | 0.4 | 0.2 |
| Example | 0 | 0.5 | 0.1 | -0.1 |

Here, as shown in Table 1 and FIG. 4, as to a direction of the warp, a negative sign (-) denotes a case in which the warp was protruded toward the PMMA resin material side. A positive sign (+) denotes a case in which the warp was protruded toward the transparent film side on which the transparent electrode was formed.

In comparison of the touch panel samples as immediately after taken out, the warp that occurred in the Example was an order of magnitude smaller than the warp that occurred in the Comparative Example. In the Example, the warp prevention layer was formed by application of the acrylic resin coating material, and the linear expansion coefficient of the transparent film having the transparent electrode was allowed to coincide with the linear expansion coefficient of the transparent resin base as a top plate. In the Comparative Example, no warp prevention layer was formed, and the PET resin film was used as the transparent film.

### Reference Signs List

- 1, 1a, 20: Capacitive touch panel
- 2, 22: Transparent resin base
- 3, 23: Transparent resin layer
- 4, 24: Top coating layer
- 5, 25: Decorative printed layer
- 6: Warp prevention layer
- 7a: First transparent electrode layer
- 7b: Second transparent electrode layer
- 8a: First transparent protection layer
- 8b: Second transparent protection layer
- 9: Adhesive member
- 10, 30a, 30b: Transparent film
- 11: Flexible printed circuit board

## Claims

1. A capacitive touch panel, comprising:
a transparent resin base;
a transparent resin layer formed on one surface of the transparent resin base and made of a different material from a material of the transparent resin base;
a decorative printed layer formed at an outer edge of another surface of the transparent resin base;
a warp prevention layer that covers the another surface of the transparent resin base and the decorative printed layer, in which a first transparent electrode layer is formed on a surface of the warp prevention layer; and
a transparent substrate bonded to the first transparent electrode layer and the warp prevention layer with an adhesive layer in between, and including a second transparent electrode layer,
wherein the transparent substrate has a linear expansion coefficient matched with a linear expansion coefficient of the transparent resin base.

2. The capacitive touch panel according to claim 1, wherein the linear expansion coefficient of the transparent resin base is different from a linear expansion coefficient of the transparent resin layer, and a linear expansion coefficient of the warp prevention layer is substantially equal to the linear expansion coefficient of the transparent resin layer.

3. The capacitive touch panel according to claim 1 or 2,
wherein the warp prevention layer is made of an acrylic resin, and
a thickness of the warp prevention layer is 3 µm to 55 µm both inclusive.

4. The capacitive touch panel according to any one of claims 1 to 3, wherein the linear expansion coefficient of the transparent substrate is equal to the linear expansion coefficient of the transparent resin base, or is substantially equal to the linear expansion coefficient of the transparent resin base.

5. The capacitive touch panel according to any one of claims 1 to 4, wherein the first and the second transparent electrode layers are made of a material that includes one or both of silver nanowire and copper nanowire.

6. The capacitive touch panel according to claim 5, further comprising a transparent protection layer formed on the first and the second transparent electrode layers.
